# EUROPEAN PATENT APPLICATION

(11) **EP 0 628 909 A2**
(43) Date of publication of application: **14.12.1994**
(21) Application number: 94108954.2
(22) Date of filing: 10.06.1994
(51) Int. Cl.: G06F 11/00

(54) **Program trace circuit and program trace method**

(30) Priority: 11.06.1993 JP 139735/93
(71) Applicant: NEC CORPORATION, Tokyo (JP)
(72) Inventor: Niwa, Kunio, c/o NEC Corporation, Tokyo (JP)
(74) Representative: Betten & Resch

(57) **Abstract**

A trace circuit comprises a latch for latching a base pointer of local variables and a latch for latching a program execution address. At the time of a data access, the content of the base pointer latch and the content of the program execution address latch are written to the trace memory together with the accessed address, data and status. A variable offset of the local variable is calculated from the address and the value of the base pointer recorded in the trace memory. The debug information table of a program being debugged is searched by this variable offset and the program execution address recorded in the trace memory, so that the local variable is made to correspond to the data access content stored in the trace memory. Thus, the efficiency of the debugging is improved by using a tracer in the course of debugging a program described in high level language such as C language.

## Description

### Background of the Invention

### Field of the invention

The present invention relates to a circuit and a method for tracing a program, and more specifically, to a circuit and a method for tracing a local variable in a program tracing.

### Description of related art

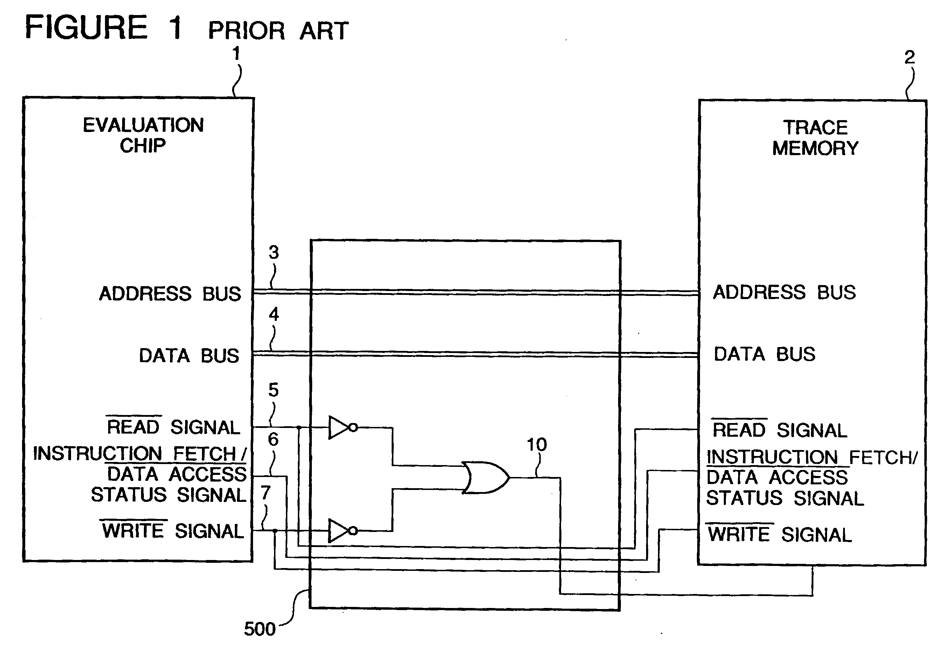

Referring to Figure 1, there is shown a conventional evaluation system, in which an evaluation chip 1 is coupled through a conventional trace circuit 500 to a trace memory 2. The shown conventional trace circuit 500 is configured to record a content on an address bus 3, a content on a data bus 4, an instruction fetch/inverted data access status signal 6, an inverted read signal 5 and an inverted write signal 7 outputted from the evaluation chip 1, into the trace memory 2 in response to a trace strobe signal 10 produced from the inverted read signal 5 and the inverted write signal 10.

On the other hand, in the case of writing to an internal register, some of evaluation chips are configured to output information for identifying a written register and a written value, in addition to the above mentioned signals.

In some other evaluation chips, an internal register is mapped in an internal RAM space, and when the internal register has been written, information identifying the written register is outputted to the address bus as an internal RAM address, and the written value is outputted to the data bus as data written to the internal RAM.

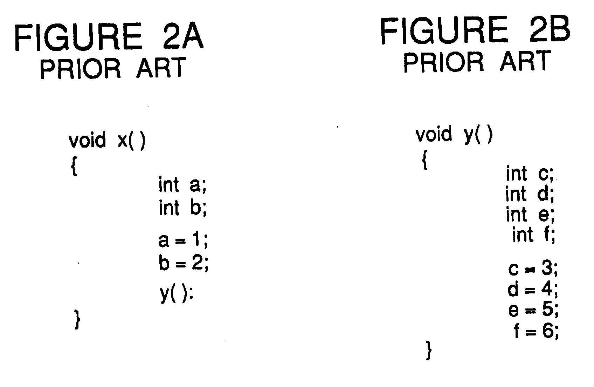

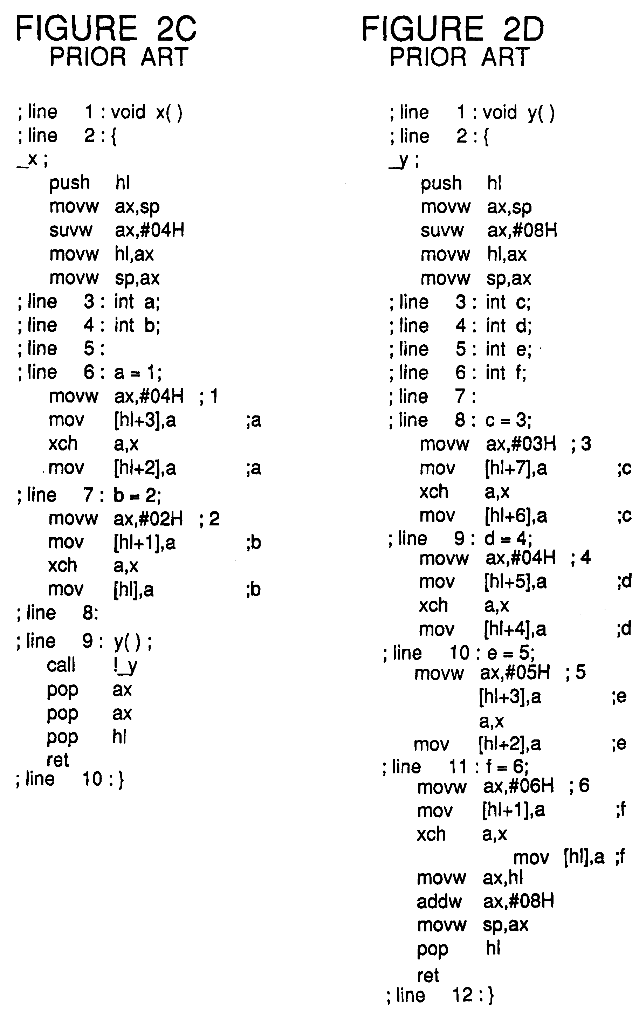

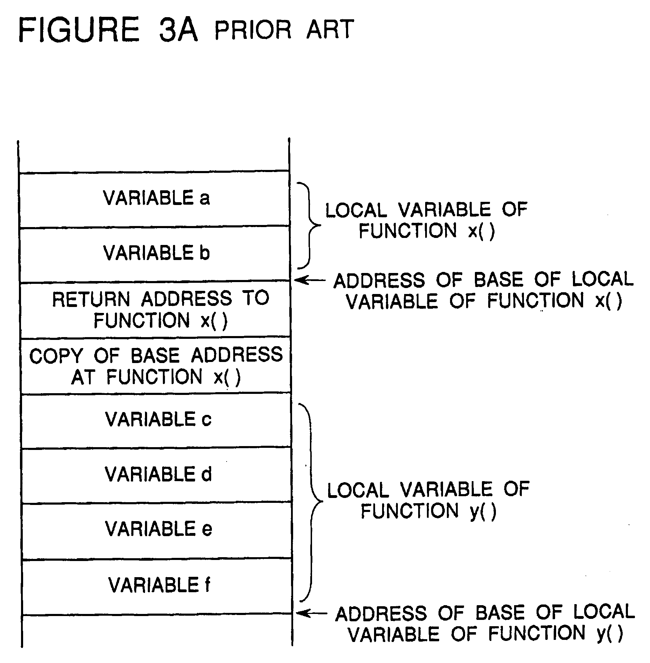

In a high level language such as C language, local variables are usually allocated to stacks. Lists of source programs written in C language are shown in Figures 2A and 2B, and assembly lists of object programs produced by compiling the source programs are shown in Figures 2C and 2D. Figure 3A shows a condition of the stack when a function y() is called out from a function x().

In Figures 2C and 2D, the address of the base of the local variable of each function is stored in a "hl" register which will serve as a base pointer, and the access to the local variable is executed by a relative addressing through the "hl" register. The address to the local variable is not definitively fixed, but varies dependently upon the address of the stack top when the function is called out.

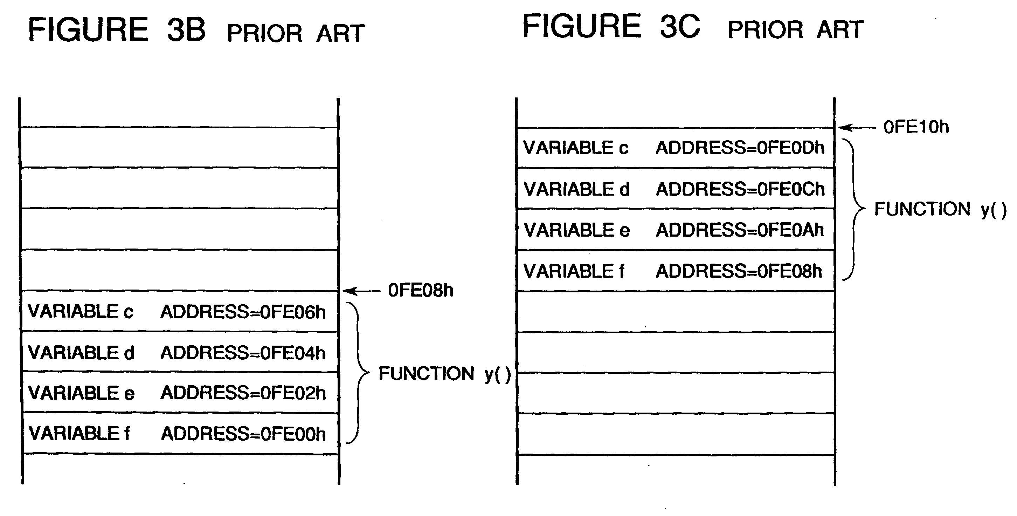

For example, even in the same function y(), the address of the local variables "c", "d", "e" , and "f" in the case that the address of the stack top is 0FF08h as shown in Figure 3B when the function is called out, are different by 8 bytes from those in the case that the address of the stack top is 0FF10h as shown in Figure 3C (where the suffix "h" indication a hexadecimal notation, and the same shall apply in this specification).

The fact that the address of the local variables is not definitively fixed but varies in the manner mentioned above, means that the local variable allocated to the same address varies from one moment to the next.

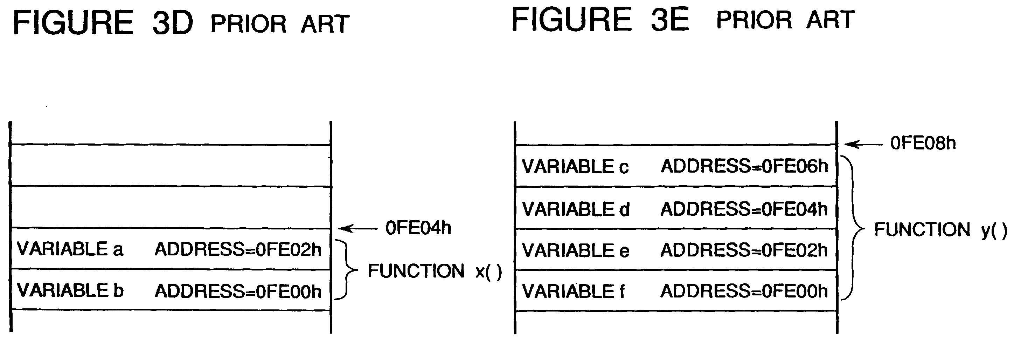

For example, the local variable "a" of the function x() called out when the stack top is 0FF04h as shown in Figure 3D and the local variable "e" of the function y() called out when the stack top is 0FF08h as shown in Figure 3E may have the same address of 0FF02h.

However, in order to identify the local variables having the characteristics as mentioned above, there are required three addresses, that is, an address at the time of the data access, an address of the base of the local variable at this time and a program execution address at this time

In the conventional trace circuit, however, only the address at the time of the data access has been stored in the trace memory as information for identifying the variables. Accordingly, in the case of the access to the local variable, a complicated data processing of the traced data has been required to identify the local variable to which the access was done.

Namely, in order to obtain the program execution address at that time, it is necessary to trace back the trace data and finally to find a value substituted into the "hl" register used as the base pointer.

Furthermore, in the case that the trace memory is filled, the newest trace data is written onto the oldest trace data so that the oldest trace data are erased, and therefore, it in some cases becomes impossible to identify the local variables. In addition, in the case of executing a qualify trace or a section trace, the data is not subjected to the trace, and in certain cases, it is not recorded in the trace memory. In these cases, it is also impossible to identify the local variables.

In the conventional trace circuit, accordingly, it has not been made to cause the data access to correspond to the local variable. The trace data was not indicated by the name of the local variable in the source program in the case of indicating the trace data. As a result, it was impossible to find out the local variable to which the access was done. Therefore, A problem has been encountered in that the traced data is not useful for the debugging.

### Summary of the Invention

Accordingly, it is an object of the present invention to provide a tracing circuit and method which has overcome the above mentioned defect of the conventional one.

Another object of the present invention is to provide a tracing circuit and method capable of easily tracing the local variables.

The above and other objects of the present invention are achieved in accordance with the present invention by a trace circuit coupled between an evaluation chip and a trace memory which receives an accessed address, data and status from the evaluation chip, the trace circuit comprising a first latch means and latching a base pointer of a local variable from the evaluation chip, for outputting the latched base pointer to the trace memory, and a second latch means receiving and latching a program execution address from the evaluation chip, for outputting the latched program execution address to the trace memory, so that at the time of a data accessing, the contents of the first and second latch means are written into the trace memory together with the accessed address, the data and the status.

By using the above mentioned trace circuit, a trace method in accordance with the present invention includes the step of calculating a variable offset of a local variable from an address and the value of a base pointer which are recorded in a trace memory, the step of searching a debug information table of a program being debugged, by means of the variable offset and a program execution address recorded in the trace memory, and the step of causing the content of a data access recorded in the trace memory to correspond to the local variable.

The above and other objects, features and advantages of the present invention will be apparent from the following description of preferred embodiments of the invention with reference to the accompanying drawings.

### Brief Description of the Drawings

Figure 1 is a block diagram of an evaluation system including a conventional trace circuit;
Figures 2A and 2B show examples of the source program written in C language;
Figures 2C and 2D illustrate the assembly list obtained when the C language source programs shown in Figures 2A and 2B are compiled;
Figure 3A shows one example of the condition of a stack when a function y() is called out from a function x();
Figures 3B, 3C, 3D and 3E show different stack examples in which the local variables "c", "d", "e", and "f" or "a" and "b" are allocated;
Figure 4 is a block diagram of the evaluation system including a first embodiment of the trace circuit in accordance with the present invention;
Figure 5A is a diagrammatic view of one example of the content of the trace memory, for illustrating the method for identifying the local variables;
Figure 5B is a diagrammatic view of one example of the table of the debug information, illustrating the method for identifying the local variables;
Figure 5C is a flow chart illustrating the method for identifying the local variables;
Figure 6 is a block diagram of the evaluation system including a second embodiment of the trace circuit in accordance with the present invention; and
Figure 7 shows an example of an internal register mapped in an internal RAM.

### Description of the Preferred embodiments

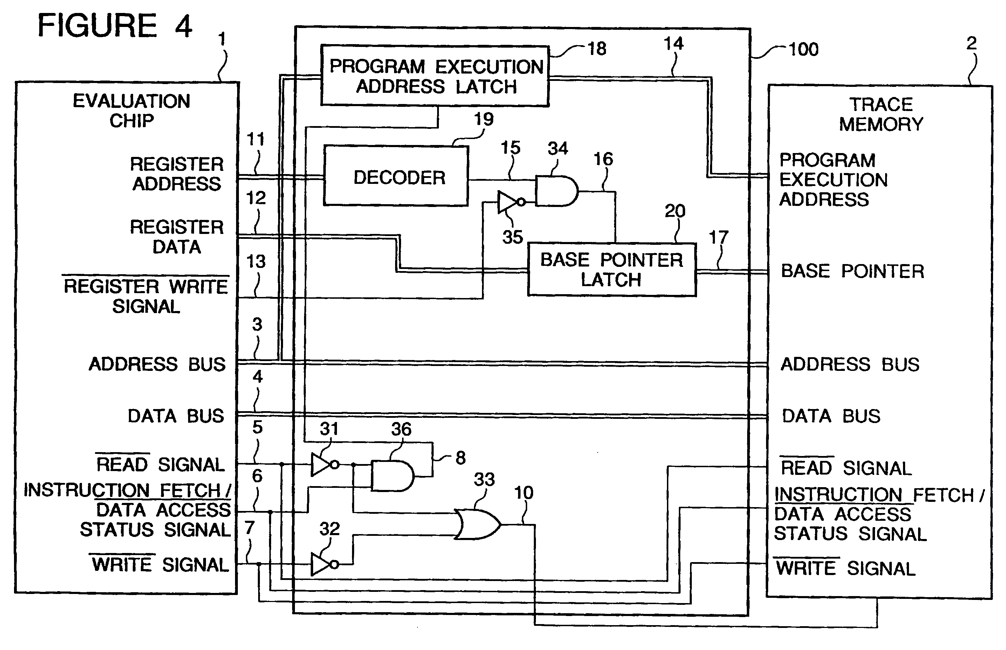

Figure 4 is a block diagram of the evaluation system including a first embodiment of the trace circuit in accordance with the present invention. In Figure 4, elements similar to those shown in Figure 1 are given the same Reference Numerals.

Referring to Figure 4, an evaluation chip 1 is coupled to a trace memory 2 through a trace circuit 100 in accordance with the present invention. Similarly to the conventional example shown in Figure 1, the evaluation chip 1 has an address bus 3, a data bus 4, an instruction fetch/inverted data access status signal terminal 6, an inverted read signal terminal 5 and an inverted write signal terminal 7, which are coupled to corresponding input terminals of the trace memory 2 through the trace circuit 100 without modification. In addition, the inverted read signal 5 and the inverted write signal 7 are supplied through inverters 30 and 31 to an OR gate 32, respectively, which in turn generates a trace strobe signal 10 supplied to the trace memory 2.

In accordance with the present invention, the evaluation chip 1 is configured to output, when an internal register has been written, a register address 11 for identifying the internal register to which the writing was done, a written register data 12, and an inverted register write signal 13 informing the writing to the internal register.

On the other hand, the trace circuit 100 includes a decoder 19 which receives the register address 11 and outputs a coincidence signal 15 when the register address 11 corresponds to a register (for example, "hl" register) which holds the address of the base of the local variable. The coincidence signal 15 is supplied to one input of an AND gate 34, which has its other input connected to receive the inverted register write signal 13 through an inverter 35, so that the AND gate 34 generates a strobe signal 16.

The trace circuit 100 also includes a base pointer latch 20 which receives the register data 12, and latches the received register data 12 in response to the strobe signal 16. An output 14 of the base pointer latch 20 is coupled to a base pointer input of the trace memory 2.

Furthermore, the trace circuit 100 includes a program execution address latch 18, which is connected to receive an address on the address bus 3 of the evaluation chip 1, and latches the received address in response to a fetch strobe signal 8, which is produced by an AND gate 36 receiving the instruction fetch/inverted data access status signal 6 and an output of the inverter 31. An output 14 of the program execution address latch 18 is coupled to a program execution address of the trace memory 2.

In response to the trace strobe signal 10, the output 14 of the program execution address latch 18 and the output 17 of the base pointer latch 20 are written to the trace memory 2 together with the content of the address bus 3, the content of the data bus 4, the inverted read signal 5, the instruction fetch/inverted data access status signal 6, and the inverted write signal 7.

Now, operation of the first embodiment of the trace circuit and the trace method in accordance with the present invention will be described.

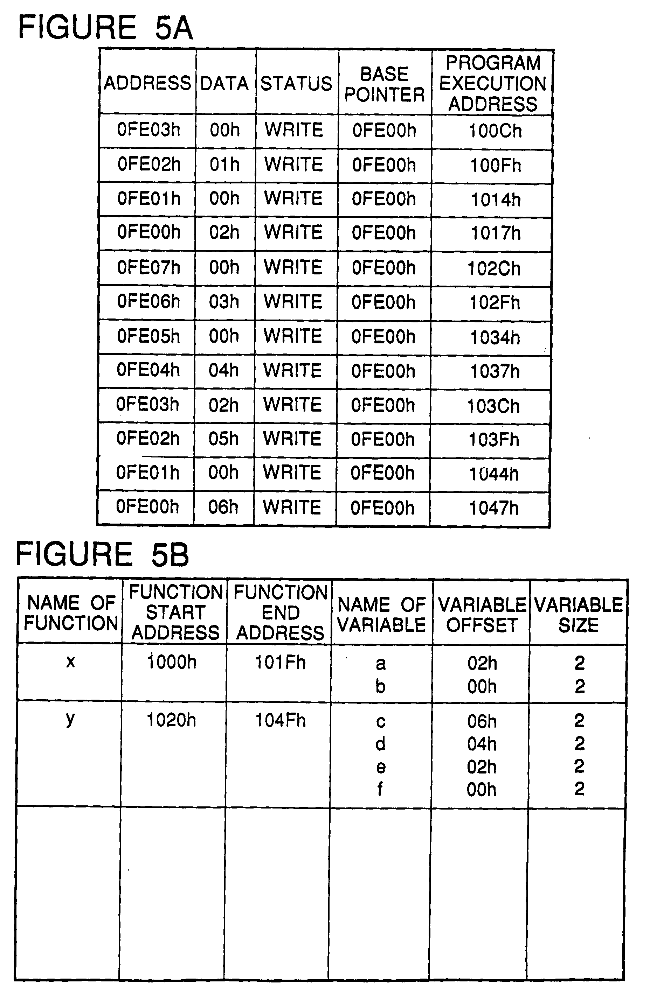

Figure 5A is a diagrammatic view illustrating the content of the trace memory. In this figure, only the information at the data access is shown for simplification of the description. In the trace memory, the address, the data, the status, the base pointer and the program execution address are stored.

Figure 5B is a diagrammatic view illustrating a table of debug information produced by a C compiler. This table include names of function, function start addresses and function end addresses, and further has, for each of functions, a sub-table including the name of variable, the variable offset and the size of the variable contained in the function.

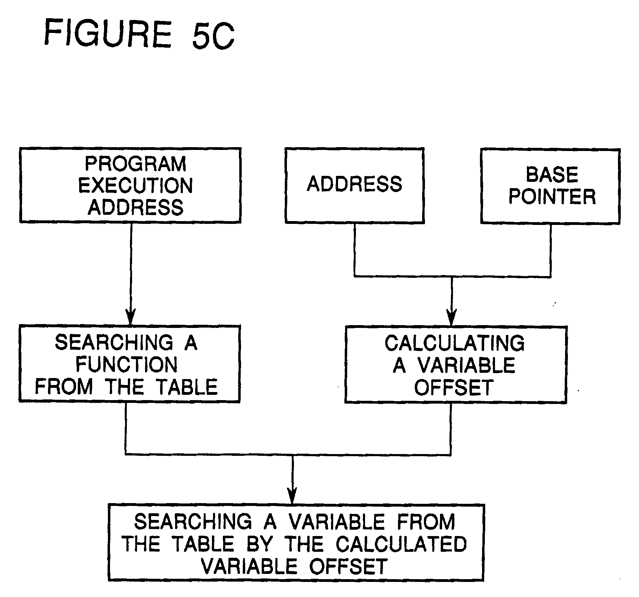

Figure 5C shows a flow chart for identifying the local variable from the content of the trace memory in accordance with the present invention.

Referring to Figure 5C, in order to identify the local variable, firstly, whether or not the program execution address stored in the trace memory exists between a function start address and a corresponding function end address, is searched so as to determine the function by which the data access has been done.

Thereafter, the variable offset is calculated by subtracting the value of the base pointer from the value of the address. Among the local variables of the function determined above, a local variable is searched which fulfils a condition in which the calculated value of the variable offset is in the range from the variable offset of the local variable on the table to a value obtained by adding the variable size to the variable offset. Thus, the local variable is identified.

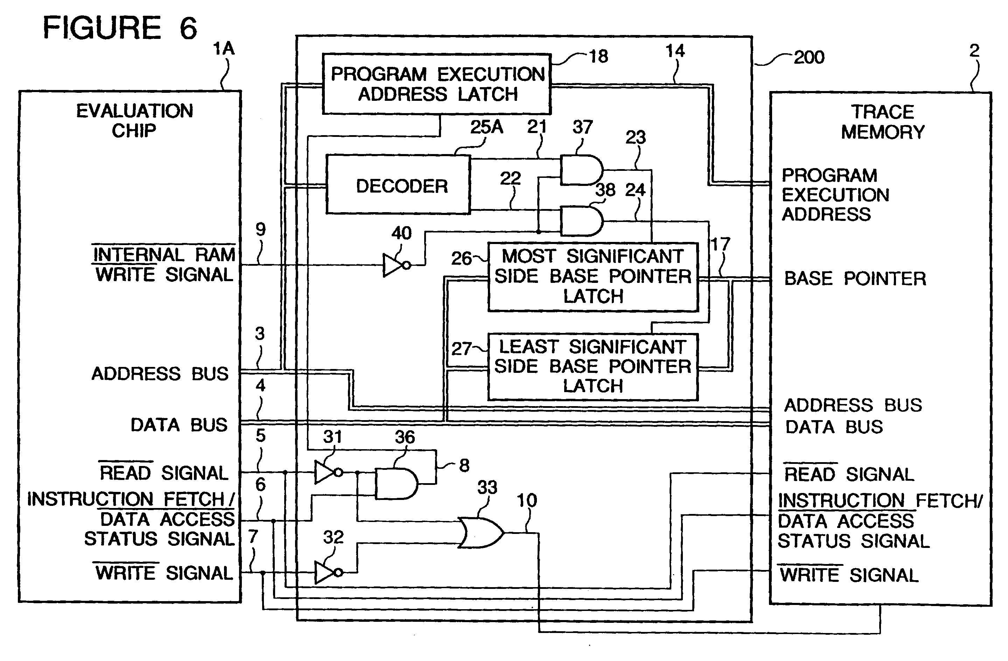

A second embodiment of the trace circuit in accordance with the present invention will be described with reference to Figure 6. In Figure 6, elements similar to those shown in Figure 4 are given the same Reference Numerals, and explanation thereof will be omitted for simplification of the description.

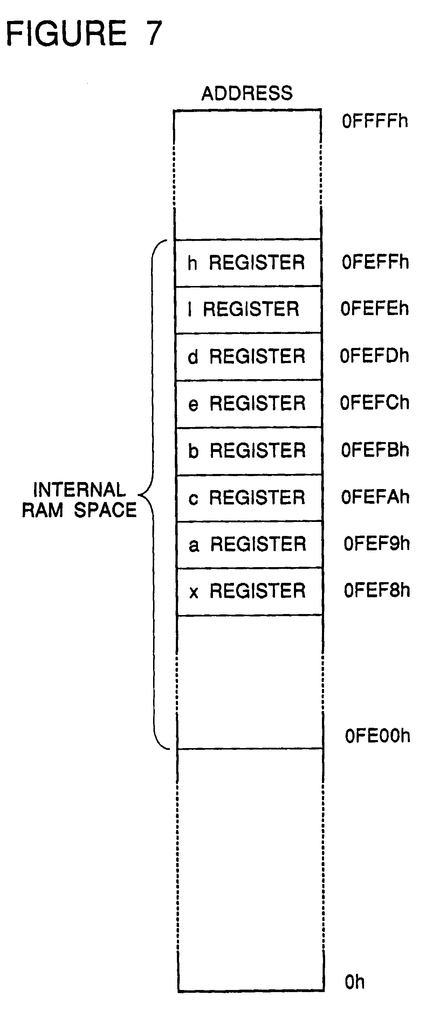

Referring to Figure 6, an evaluation chip 1A contains an internal register mapped in an internal RAM space as shown in Figure 7, and has a 8-bit data bus 4 and a 16-bit address bus 3. In the case of writing to the register, the evaluation chip 1A outputs a register address to the address bus 3 as an internal RAM address and a register data is outputted to the data bus 4 as an internal RAM data, and also supplies an inverted internal RAM write signal 9. In addition, the evaluation chip 1A is configured to output an instruction fetch/inverted data access status signal 6, an inverted read signal 5 and an inverted write signal 7, similarly to the first embodiment.

A trace circuit 200 of the second embodiment of the present invention has the program execution address latch 18, the inverter 31 and 32, the OR gate 33 and the AND gate 36, similarly to the first embodiment. Furthermore, since the data bus is 8 bits, the trace circuit 200 is configured in such a way that, the writing to the register (for example, "hl" register) which is allocated to hold the address of the base of the local variable is divided into two writings, that is, the writing to the most significant address register ("h" register) and the writing to the least significant address register ("l" register).

For this purpose, the trace circuit 200 includes a decoder 25A connected to the address bus 3 of the evaluation chip 1A, for outputting a most significant register address coincidence signal 21 when the content of the address bus 3 coincides with the most significant register address, and a least significant register address coincidence signal 22 when the content of the address bus 3 coincides with the least significant register address. The most significant register address coincidence signal 21 is supplied to one input of an AND gate 37, which receives at its other input the inverted internal RAM write signal 9 through an inverter 40 and which generates a most significant register address strobe signal 23. The least significant register address coincidence signal 22 is supplied to one input of another AND gate 38, which has its other input connected to an output of the an inverter 40 receiving the inverted internal RAM write signal 9, and which generates and a least significant register address strobe signal 24.

The trace circuit 200 also includes a most significant base address latch 26 and a least significant base address latch 27, which are coupled to the data bus 4 of the evaluation chip 1A, and which are controlled by the most significant register address strobe signal 23 and the least significant register address strobe signal 24. Thus, signals on the data bus 4 are latched to the most significant base address latch 26 in response to the most significant register address strobe signal 23, and to the least significant base address latch 27 in response to the least significant register address strobe signal 24.

On the other hand, the operation of the program execution address latch 18 is identical to that of the first embodiment.

An output 14 of the program execution address latch 18 and an output 17 of the base pointer latch thus obtained (the most significant base pointer latch 26 and the least significant base pointer latch 27) are supplied to the trace memory 2, and written to the trance memory 2 similarly to the first embodiment.

As mentioned above, according to the present invention, the value of the base pointer and the program execution address are written to the trace memory together with the accessed address, data and status. Accordingly, it is possible to easily cause the contents of the data access recorded in the trace memory to correspond to the local variables.

In addition, in the case that the trace memory is filled and even in the case that the qualify trace or the section trace is executed, it is always possible to identity the local variables. Therefore, the trace data can be indicated by the name of the local variable in the source program. This is effective in improving the efficiency of the debugging.

The invention has thus been shown and described with reference to the specific embodiments. However, it should be noted that the present invention is in no way limited to the details of the illustrated structures but changes and modifications may be made.

## Claims

1. A trace circuit coupled between an evaluation chip and a trace memory which receives an accessed address, data and status from the evaluation chip, the trace circuit comprising a first latch means and latching a base pointer of a local variable from said evaluation chip, for outputting the latched base pointer to said trace memory, and a second latch means receiving and latching a program execution address from said evaluation chip, for outputting the latched program execution address to said trace memory, so that at tile time of a data accessing, the contents of said first and second latch means are written into said trace memory together with the accessed address, the data and the status.

2. A trace circuit claimed in Claim 1 further including a logic circuit receiving a read signal and a data access status signal from said evaluation chip, for generating a first strobe signal to said second latch means, so that, in response to said first strobe signal, said second latch means latches an accessed address from said evaluation chip as the program execution address.

3. A trace circuit claimed in Claim 2 further including a decoder receiving a register address from said evaluation chip, for generating a coincidence signal when the received register address corresponds to a register which holds the address of the base of the local variable, and a second logic circuit receiving said coincidence signal and a register write signal from said evaluation chip, for generating a second strobe signal to said first latch means, so that in response to said second strobe signal, said first latch means latches the register address from said evaluation chip, as the base pointer of the local variable.

4. A trace circuit claimed in Claim 2 further including a decoder receiving the accessed address from said evaluation chip, for generating a coincidence signal when the accessed address coincides with a register which holds the address of the base of the local variable, and a second logic circuit receiving said coincidence signal and an internal RAM write signal from said evaluation chip, for generating a second strobe signal to said first latch means, so that in response to said second strobe signal, said first latch means latches the accessed address from said evaluation chip, as the base pointer of the local variable.

5. A trace circuit claimed in Claim 2 further including a decoder receiving the accessed address from said evaluation chip, for outputting a most significant register address coincidence signal when the content of the accessed address coincides with the most significant register address, and a least significant register address coincidence signal when the content of the accessed address coincides with the least significant register address, a second logic circuit receiving said most significant register address coincidence signal and an internal RAM write signal from said evaluation chip, for generating a second strobe signal, and a third logic circuit receiving said least significant register address coincidence signal and said internal RAM write signal from said evaluation chip, for generating a third strobe signal, and wherein said first latch means includes a most significant base pointer latch and a least significant base pointer latch which are coupled to a data bus of said evaluation chip, said most significant base pointer latch responding to said second strobe signal to latch data on said data bus as a most significant base pointer, said least significant base pointer latch responding to said third strobe signal to latch data on said data bus as a least significant base pointer.

6. A method for tracing a local variable in a program tracing performed in a system in which an evaluation chip and a trace memory are coupled through a trace circuit coupled, said trace circuit comprising a first latch means and latching a base pointer of a local variable from said evaluation chip, for outputting the latched base pointer to said trace memory, and a second latch means receiving and latching a program execution address from said evaluation chip, for outputting the latched program execution address to said trace memory, so that at the time of a data accessing, the contents of said first and second latch means are written into said trace memory together with an accessed address, data and status from said evaluation chip, the method including the step of calculating a variable offset of a local variable from an address and the value of a base pointer which are recorded in a trace memory, the step of searching a debug information table of a program being debugged, by means of said variable offset and a program execution address recorded in said trace memory, and the step of causing the content of a data access recorded in said trace memory to correspond to the local variable.

7. An evaluation system including an evaluation chip, a trace memory which receives an accessed address, data and status from the evaluation chip, and a trace circuit coupled between the evaluation chip and the trace memory, the trace circuit comprising a first latch means and latching a base pointer of a local variable from said evaluation chip, for outputting the latched base pointer to said trace memory, and a second latch means receiving and latching a program execution address from said evaluation chip, for outputting the latched program execution address to said trace memory, so that at the time of a data accessing, the contents of said first and second latch means are written into said trace memory together with the accessed address, the data and the status.

8. An evaluation system claimed in Claim 7 wherein said trace circuit further includes a logic circuit receiving a read signal and a data access status signal from said evaluation chips for generating a first strobe signal to said second latch means, so that, in response to said first strobe signal, said second latch means latches an accessed address from said evaluation chip as the program execution address.

9. An evaluation system claimed in Claim 8 wherein said trace circuit further includes a decoder receiving a register address from said evaluation chip, for generating a coincidence signal when the received register address corresponds to a register which holds the address of the base of the local variable, and a second logic circuit receiving said coincidence signal and a register write signal from said evaluation chip, for generating a second strobe signal to said first latch means, so that in response to said second strobe signal, said first latch means latches the register address from said evaluation chip, as the base pointer of the local variable.

10. An evaluation system claimed in Claim 8 wherein said trace circuit further includes a decoder receiving the accessed address from said evaluation chip, for generating a coincidence signal when the accessed address coincides with a register which holds the address of the base of the local variable, and a second logic circuit receiving said coincidence signal and an internal RAM write signal from said evaluation chip, for generating a second strobe signal to said first latch means, so that in response to said second strobe signal, said first latch means latches the accessed address from said evaluation chip, as the base pointer of the local variable.

11. An evaluation system claimed in Claim 8 wherein said trace circuit further includes a decoder receiving the accessed address from said evaluation chip, for outputting a most significant register address coincidence signal when the content of the accessed address coincides with the most significant register address, and a least significant register address coincidence signal when the content of the accessed address coincides with the least significant register address, a second logic circuit receiving said most significant register address coincidence signal and an internal RAM write signal from said evaluation chip, for generating a second strobe signal, and a third logic circuit receiving said least significant register address coincidence signal and said internal RAM write signal from said evaluation chip, for generating a third strobe signal, and wherein said first latch means includes a most significant base pointer latch and a least significant base pointer latch which are coupled to a data bus of said evaluation chip, said most significant base pointer latch responding to said second strobe signal to latch data on said data bus as a most significant base pointer, said least significant base pointer latch responding to said third strobe signal to latch data on said data bus as a least significant base pointer.
